# EUROPEAN PATENT SPECIFICATION

(11) **EP 3 639 706 B1**
(45) Date of publication and mention of the grant of the patent: **01.06.2022**
(21) Application number: 18201505.7
(22) Date of filing: 19.10.2018
(51) Int. Cl.: A47J 27/04, F24C 15/32

(54) **METHOD FOR OPERATING A STEAM COOKING APPLIANCE AND STEAM COOKING APPLIANCE**
VERFAHREN ZUM BETRIEB EINES DAMPFGARGERÄTES SOWIE DAMPFGARGERÄT
PROCÉDÉ DE FONCTIONNEMENT D'UN APPAREIL DE CUISSON À LA VAPEUR ET APPAREIL DE CUISSON À LA VAPEUR

(43) Date of publication of application: 22.04.2020
(73) Proprietor: ELECTROLUX APPLIANCES AKTIEBOLAG, 105 45 Stockholm (SE)
(72) Inventor: PATELLA, Claudia, 47100 Forli (IT); BANZATO, Massimo, 47100 Forli (IT); CARNEVALI, Marco, 47100 Forli (IT); DELL'OLIO, Alberto, 47100 Forlì (IT)
(74) Representative: Electrolux Group Patents

(56) References cited:
- EP-A1- 2 409 571
- WO-A1-2018/103966
- WO-A1-2018/103967
- US-A1- 2018 070 757

## Description

The present invention relates to a steam cooking appliance and to a method for operating a steam cooking appliance.

Steam cooking appliances such as steamers or ovens with steaming function, typically comprise a tank for supplying the water for the steam generation, which tank either can be filled while being installed at the steam cooking appliance or which can be removed from the steam cooking appliance so that the tank can be taken to a water tap to be filled and then reinstalled at the steam cooking appliance.

While in steam cooking appliances the tank needs to be serviced frequently so as to be filled, emptied or cleaned, the tank should be easily accessible, which however is difficult to implement given the design constraints in modern household appliances. Thus there are household appliances on the market, in which the tank is hidden behind the front panel of the appliance, which solution necessitates that the front panel needs to be removed or displaced so as to allow access to the tank, which not only requires complicated and thus costly mechanics, but which also is disadvantageous in terms of handling.

In EP 2 550 902 A1 there is disclosed a household appliance in which the tank is located such that in the use position of the tank a front panel of the tank is arranged flush with the front panel of the household appliance. In order to move the tank into an extracted position so as to expose a filling opening, the user has to push onto a front section of the tank which is exposed within the front panel of the household appliance. By pushing the tank for a certain distance inwards, a mechanism is released which holds the tank inside the household appliance, so that the tank can be exerted by a spring mechanism. Another steam cooking appliance is known from EP2409571.

Document US2018070757 describes a steam cooking appliance according to the preamble of claim 9.

While there is room for improvement of steam cooking appliances, it is an object of the present invention to provide for a steam cooking appliance that provides for additional comfort of use. In accordance with the present invention the above object is solved by a method for operating a steam cooking appliance as it is defined in claim 1, as well as by a steam cooking appliance as it is defined in claim 9.

The steam cooking appliance and the method for operating a steam cooking appliance suggested in the present application are configured for monitoring the water level within the steam system and displacing the water tank from the operative position to the non-operative position if it is detected that the water level within the steam system is below a predetermined level which is determined based on a selected operating mode that requires water.

In this manner the water tank can be automatically expelled into the non-operative position when the steam cooking appliance determines that the steam system does not contain sufficient water to conduct an operation that the user wishes the steam cooking appliance to perform, so that the user is informed in a direct and unambiguous manner that the water tank needs to be filled before the intended operation can be completed.

Hence, in contrast to known devices in which either the steam generation simply ceases when there is insufficient water in the steam system and/or which merely provide for some optical indication that the tank should be filled as soon as a steam cooking operation is selected, in the method and system of the present invention the user is prompted in an unmistakable manner to take action as soon as the appliance detects that the tank needs to be filled so that the steam system contains sufficient water to carry out a desired cooking operation.

The predetermined level can be determined based on a selected operating mode, so as to take into account that different operating modes may require different amounts of water. Thus, dependent on the actual water level in the steam system, the user can be alerted to refill water by displacing the water tank into the non-operative position.

In accordance with the present invention the water level within the steam system is continuously or repeatedly monitored so as to alert the user that the steam system needs refilling of water as soon as the water level drops below a certain level, which is indicative that the amount of water within the steam system is insufficient to carry out a current or intended cooking function.

Thus, rather than routinely alerting the user that the tank needs refilling, as soon as a steam cooking operation is selected, which indication however is given irrespective of whether or not the tank is filled to a sufficient level, in accordance with the present invention the user is prompted in an unmistakable manner to take action as soon as the appliance detects that the tank needs to be filled so that the steam system contains sufficient water to carry out a desired cooking operation.

The water level in the steam system preferably is detected within the water tank and/or within the steam generator.

Preferred embodiments of the present invention are defined in the dependent claims.

In embodiments, the ejection of the water tank may be activated together with displaying a message that recommends the user to check the water level in the water tank.

Thus, to provide for additional guidance, the method further can comprise providing an optical and/or an acoustic alert when a function is selected that requires water, so as to further prompt the user to fill up the water tank.

In preferred embodiments of the claimed method, the predetermined level is determined before the start of an operating program upon a user selecting an operating mode.

In such embodiments, when the user selects an operating mode, such as a certain steam cooking program, the steam cooking appliance checks whether sufficient water is available in the tank to complete the selected steam cooking operating, and should the tank not contain sufficient water, displace the water tank into the non-operative position, so that the user immediately when selecting a cooking operation is prompted to correspondingly fill the water tank.

Alternatively or additionally to determining the predetermined level before the start of an operating program, the determination of the predetermined level can be repeatedly carried out during execution of an operating program, so that a user, by displacing the tank into the non-operative position, can be prompted to refill the tank as soon as it is detected that there is too little water in the steam system.

In addition to displacing the water tank from the operative position to the non-operative position if it is detected that the water level within the steam system, such as within the water tank or steam circuit is below a predetermined level, the steam cooking appliance further can be configured to output a user alert to prompt the user to fill the water tank. Such user alert can comprise an optical signal or message, such as a warning light, an illuminated pictorial symbol, a text message, an alphanumerical message or the like.

Considering that steam cooking programs often are carried out over extended periods of time during which the user usually does not continually observe the steam cooking appliance, in preferred embodiments the user alert additionally or alternatively can comprise an acoustic signal, such as an alarm, which is output when it is detected that the water level within the water tank is below a predetermined level.

In preferred embodiments the non-operative position into which the tank is displaced when it is detected that the water level within the water tank is below a predetermined level is a position in which a fill opening of the water tank is exposed, so that a user can refill the water tank directly at the steam cooking appliance. In embodiments, in which the steam cooking appliance is an oven having a front door with a handle that projects from the front face of the cooking appliance, the appliance can be configured such that the water tank when in the non-operative position projects from the front face of the appliance by a similar distance as does the door handle, so as to avoid that a person passing the oven accidentally gets caught by the partially ejected water tank when located in the non-operative position.

In preferred embodiments, the steam cooking appliance of the present invention comprises a steam oven, such as a so-called "full-steam" oven, or a steam combination oven, i.e. an oven that is heated by other heating techniques than steam, such as by electric heating elements, convection, hot air, or microwave, wherein the oven is configured for steam addition or for steam-assisted cooking.

The steam cooking appliance can comprise a front panel having an opening for insertion of the water tank, and the water tank can have a front panel which in the operative position is positioned to be substantially flush with the front panel of the steam cooking appliance, so as to provide for a smooth and continuous surface of the steam cooking appliance, which is desirable not only for design reasons but also for product safety reasons because it avoids elements such as a handle from projecting from the front panel of the appliance.

In preferred embodiments, the steam cooking appliance comprises a touch sensitive element assigned to the water tank and operable to activate the drive means for displacing the water tank.

Thus, the front panel of the water tank can comprise a touch sensitive element that is operable to activate the drive means for displacing the water tank. The touch sensitive element also can be provided at other locations, for example at a side wall or the rear wall of the water tank, so as to detect when the tank as such is pushed inwardly.

In addition to the steam cooking appliance automatically ejecting the water tank when it is determined that the steam system or the tank does not contain sufficient water to carry out a selected cooking operation, by the use of the touch sensitive element the user also can manually cause ejection of the water tank, so as to fill the tank before starting a cooking operation or for cleaning purposes.

Whereas a touch sensitive element for actuation of the drive means also could be provided at a different location at the steam cooking appliance, such as at the front panel preferably in proximity to the tank, providing for a touch sensitive element at the front panel of the water tank is considered to allow for a particularly intuitive operation of the device. In such embodiments, the touch sensitive element can be a switch that is provided in the front panel of the tank, or may be a switch which is provided at the front face of the tank and which can be activated by depressing a button element which as such forms the front panel of the tank.

In embodiments in which the tank comprises a fill opening which in the non-operative position is at least partially exposed to be accessible to a user, the tank preferably comprises a water-permeable cover which spans the fill opening. While the permeable cover allows filling water into the tank, the cover at the same time avoids larger objects from accidentally entering the tank, such as articles like food items. Furthermore, the permeable cover acts as protective cover which hinders a user from having a finger trapped in the tank opening when inserting the tank into the steam cooking appliance, which is a particularly advantageous feature in embodiments in which the tank can be inserted automatically such as by means of a motor that is adapted to pull in the tank.

To alert the user when the steam system does not contain sufficient water to carry out a selected cooking operation, the steam cooking appliance can comprise an alarm, such as an acoustic and/or optic alarm, wherein the control means is configured to activate the alarm when it is detected that the steam system requires a refill with water, such as when it has been detected that the water level within the water tank is below a predetermined level.

The water tank can comprise a transparent or translucent scale for the filling level of the tank. To this end, the water tank as such can be made of a transparent material, such as a transparent plastic material, wherein the scale is provided as a printing, an embossing or a label on or in the transparent material. In the alternative, the tank can be made of a nontransparent material in which there is provided a transparent window with a scale. The scale may have divisions as appropriate and further can comprise markings for a maximum level and/or for a minimum level.

Preferably the scale is provided at a location in the water tank so that the scale is visible when the tank is in the non-operative position, which as explained above can be a position in which the tank is partially ejected so as to expose a fill opening for filling the tank.

To allow the tank to be carried to a water tap, such as a kitchen sink, the steam cooking appliance preferably allows complete removal of the water tank from the steam cooking appliance. To this end, the steam cooking appliance and the water tank can comprise cooperating fluid couplings, which when the tank is coupled to the steam cooking appliance provide for a fluid coupling of the tank to a steam generator of the steam cooking appliance, and which when the tank is uncoupled from the steam cooking appliance close at least the fluid coupling at the tank so as to avoid water from flowing out of the tank while the tank is not in its operative position.

By providing for a removable tank, the operation of the steam cooking appliance is facilitated since no additional vessel is required for filling the tank.

In the steam cooking appliance suggested herein the control means can be configured to initiate displacement of the water tank from a non-operative position to the operative position
(a) on user request,
(b) upon insertion of the water tank at the steam cooking appliance;
(c) when detecting that the water tank has been filled to at least the predetermined level; and/or
(d) on expiry of a predetermined waiting time upon expulsion of the water tank.

In addition to providing for an automatic expulsion of the water tank when it is detected that the tank needs refilling, the appliance further can be configured to automatically retract the partially ejected tank, either on request of the user or automatically by the control means. Thus, the user may activate a respective switch or button or may insert the tank by a certain distance so as to couple the tank to tank displacement means, wherein the control means, upon noting such coupling, activates the drive means to fully pull in the tank. Further to such manually triggered insertion of the tank, the tank also can be displaced into its operative position by the control means, such as when detecting that the water tank has been filled to at least the predetermined level or on expiry of a predetermined waiting time after the water tank has been displaced into the partially ejected non-operative position. In such latter cases, it further is advantageous to output a warning message that the tank is to be pulled-in automatically, so as to avoid the tank from being pulled in while a user is pouring water into the fill opening.

The steam cooking appliance further can comprise a display and the control can be configured to indicate on the display the filling level of the tank and/or a quantity of water to be filled into the water tank so as to suggest to the user an appropriate amount of water to be loaded in the water tank, as soon as it is ejected for water filling. This message can be shown on the display as a symbol, such as a bar display or a segmented display, or as a number indicating a volume or a filling level of the tank. In embodiments in which the water tank comprises a transparent or translucent scale, the message can consist in a symbol or number that corresponds to a marking on the scale, such as "1", "2", "3", etc., "½", "MAX" or the like.

Preferred embodiments of the present invention are described below by reference to the drawings in which:
Figure 1 illustrates a steam cooking appliance in accordance with the present invention;
Figures 2 to 4 illustrates the steam cooking appliance during different operational states; and
Figure 5 illustrates another embodiment of a steam cooking appliance in accordance with the present invention.

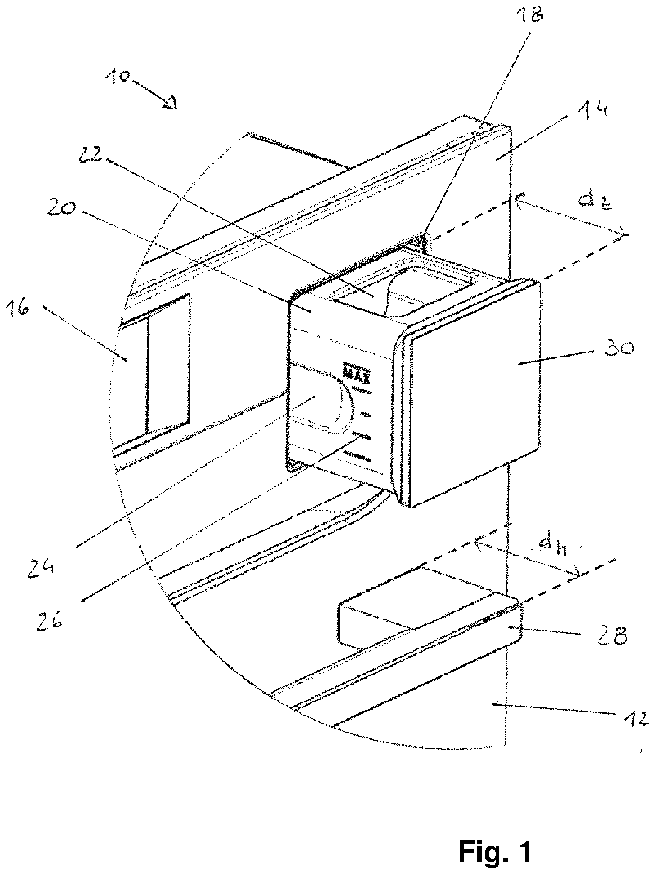

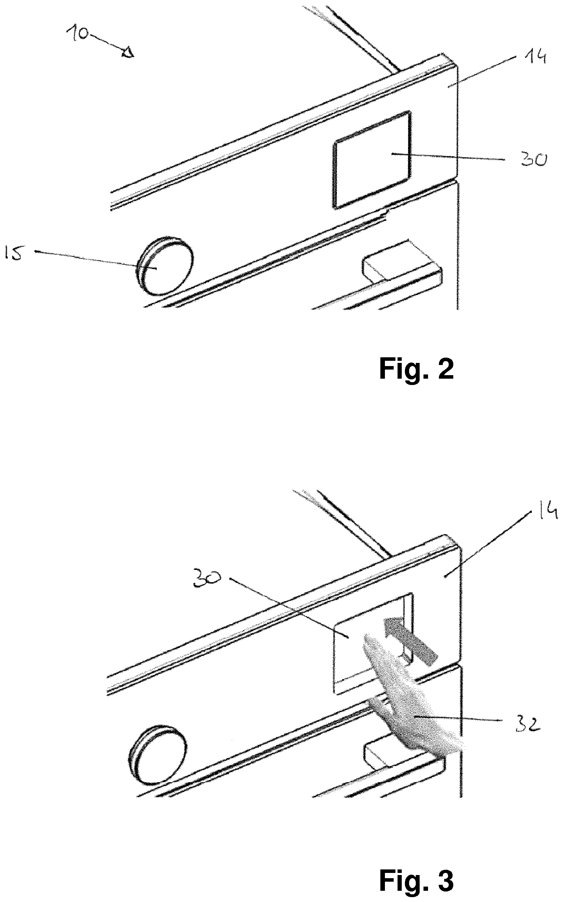

Figure 1 illustrates a steam cooking appliance 10 which in the illustrated embodiment is a cooking oven having an oven cavity (not shown) which is closed by an oven door 12. Above oven door 12 the steam cooking appliance 10 comprises a front panel 14 in which there are provided operating elements, such as a knob 15 shown in Figs. 2 to 4, and a display 16. Display 16 also can be configured as a touchscreen element which may be used both as a display and as a user interface for the user to input instructions to the steam cooking appliance. In the front panel 14 there is provided an opening 18 in which there is accommodated a water tank 20 which in the situation illustrated in Figure 1 is located in the non-operative position in which the water tank 20 is partially ejected to expose a fill opening 22 which is provided at the upper side of tank 20.

In the illustrated embodiment tank 20 is a drawer-like element which can be displaced in a horizontal direction so is to be ejected from, or injected into, the steam cooking appliance 10. While water tank 20 is illustrated as having a substantially square cross-section, the tank may have any desired cross-sectional shape. Water tank 20 has a volume of about 1 liter which is well sufficient for usual cooking operations carried out in a steam cooking appliance. While in the non-operative position illustrated in Figure 1 the water tank 20 can be filled by pouring water into fill opening 22, in preferred embodiments water tank 20 is configured to be completely removable from the steam cooking appliance so that the tank can be carried to a water tap for filling.

To facilitate manipulating and carrying the water tank 20, the water tank 20 at its lateral sides comprises recessed grips 24 which are sized to accommodate fingers of the user. Water tank 20 which is made of a transparent or translucent material further is provided with a scale 26 which indicates to the user the filling level of water within the tank. To enable an unobstructed view onto the scale 26 during pouring water into the filling opening 22, irrespective of whether the user is left-handed or right-handed, a scale 26 is provided on both sides of water tank 20. In the illustrated embodiment, the distance dₜ by which the tank is ejected when in the non-operating position is similar to the distance dₕ by which a door handle 28 that is provided at the oven door 12 projects from the front face of the steam cooking appliance 10.

Figures 2 to 4 illustrate a steam cooking appliance 10 similar to the one depicted in Figure 1 during different operational states of the water tank 20.

Figure 2 shows the situation when water tank 20 is in its operative position in which it is fully inserted into the steam cooking appliance 10 so as to supply water to a steam generator which provides steam into the oven cavity. In the operative position a front panel 30 that is mounted at the front face of water tank 20 is positioned to extend in the same plane as the front face of front panel 14 of the steam cooking appliance 10, so that tank front panel 30 is flush with appliance front panel 14.

Figure 3 illustrates a manual operation of water tank 20 wherein the user pushes with his hand 32 onto the front panel 30 of the tank which in this embodiment is configured as a touch sensitive button that is connected to activate a drive motor for displacing the tank from the operative position of Figure 2 into the non-operative position illustrated in Figure 1.

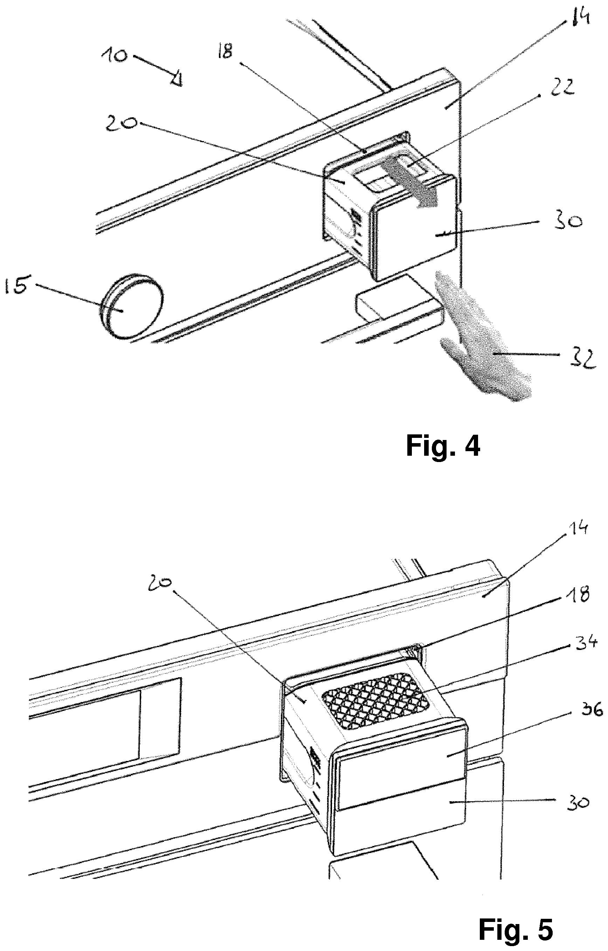

Figure 4 illustrates the steam cooking appliance 10 when the control of the cooking appliance has triggered expulsion of the water tank 20 upon having determined that the water level within the tank is not sufficient to carry out a cooking operation which the user has selected such as by operation of knob 15. To this end, water tank 20 comprises a level sensor which continually measures the water level within the tank and provides a level signal to the control of the cooking appliance. In this situation water tank 20 is ejected from opening 18 without the hand 32 of the user touching the front panel 30 of the water tank 20 until the tank reaches the non-operative position also illustrated in Figure 1 in which the fill opening 22 of water tank 20 is exposed so that water can be poured into the tank. In addition to the user being alerted to refill the tank by the expulsion of the tank, an alarm such as an acoustic alarm, for example a beeper, or a visual alarm, such as an icon or a text message displayed on display 16 can be output to the user. The alert shown on the user interface may be also constituted by a symbol or icon and numbers

Figure 5 illustrates a further embodiment in which the fill opening 22 is covered by a mesh 34 which allows pouring water into the tank 20 but which prevents the user from reaching into opening 22 so as to avoid that a finger is trapped in the opening 22 when the tank is reinserted into the opening 18 provided in front panel 14.

Mesh 32 may have a certain thickness so that it additionally can act as a wave breaker for horizontal water waves that may be created during handling or motion of the container. Furthermore, the mesh 34 may be configured to be dismountable, so that the mesh 34 can be removed in case that a user wants to clean the interior of the water tank 20.

Figure 5 further illustrates an embodiment of the steam cooking appliance in which only a portion of the front face of the water tank 20 is used as a button for activating the drive means. That is, whereas the lower part of the front face of water tank 20 is covered by a front panel 30 that is fixed with respect to the tank, an activation button 36 is provided in the upper half of the front face of water tank 20 above front panel 30.

The displacement of water tank 20 preferably is implemented by electric drive means which engages the tank, such as an electric motor which engages a gear rack that is provided at the bottom side of the tank. In such embodiments, the tank when in the non-operative position illustrated in Figure 1 is positioned such that the end of the gear rack still is engaged with the motor, but by slightly pulling water tank 20 outwards is disengaged, so that the tank can be completely removed from the steam cooking appliance 10.

Similarly, upon having completely removed the tank so as to fill the tank at the kitchen sink, the tank 20 is inserted into opening 18 within front panel 14 until a latching mechanism is able to grab the rear part of the tank. The engagement of the latching mechanism with the drive motor can be sensed by a sensor which sends and activation signal to the control means, which then can start the latching mechanism so as to fully retract the tank into its operative position illustrated in Figure 2. The latching mechanism can be driven by a motor.

In such embodiments, the control further preferably is configured to cause the tank to be automatically displaced from the non-operative position of Figure 1 into the operative position of Figure 2 after expiry of a certain waiting time.

Thus, if the container has been ejected by a user, and has been left in the ejected position without any other operation being performed such as interaction with the door or the user interface, after a certain period of time, referred to as "waiting time", the container will be automatically retracted by the oven controls. For instance, if the user selects a steam function and activates the start of the cooking operation, but then the water sensor detects that there is not enough water to perform the selected function, the water container will be ejected. At this point, if the user does not operate the oven within the waiting time, the container will be automatically re-inserted, whereupon the cooking operation can be started to be conducted until the water in the tank has been consumed.

The automatic reinsertion will also be activated when in the above situation in which the container has been ejected, the user selects a different cooking function for which less water is required, and thus the level sensor indicates that the water level within the steam system is at or above the predetermined level required for the newly selected cooking operation.

### Reference signs

- 10: steam cooking appliance
- 12: oven door
- 14: front panel
- 15: knob
- 16: display
- 18: opening
- 20: water tank
- 22: fill opening
- 24: recessed grip
- 26: scale
- 28: door handle
- 30: front panel of tank
- 32: hand
- 34: mesh
- 36: activation button

## Claims

1. A method for operating a steam cooking appliance (10) having a food preparation cavity, a steam system comprising a steam generator and a water tank (20) for supplying water to the steam generator, and drive means for displacing the water tank between an operative position in which the water tank is inserted into the steam cooking appliance to supply water to the steam generator, and a non-operative position in which the water tank is at least partially expelled from the steam cooking appliance, the method comprising:
(a) monitoring the water level within the steam system; and
(b) displacing the water tank (20) from the operative position to the non-operative position if it is detected that the water level within the steam system is below a predetermined level, wherein the predetermined level is determined based on a selected operating mode that requires water.

2. The method of claim 1, the method further comprising:
providing an optical alert to prompt the user to fill up the water tank.

3. The method of any of the preceding claims, further comprising outputting an acoustic alert when a function is selected that requires water.

4. The method of claim 1, in which the predetermined level is determined before the start of an operating program upon a user selecting an operating mode.

5. The method of claim 1 or 4, in which the determination of the predetermined level is repeatedly carried out during execution of an operating program.

6. The method of any of the preceding claims, further comprising outputting a user alert when it is detected that the water level within the water tank (20) is below a predetermined level.

7. The method of claim 6, wherein the user alert comprises an acoustic alarm when it is detected that the water level within the water tank (20) is below a predetermined level.

8. The method of any of the preceding claims, in which the non-operative position into which the water tank (20) is displaced when it is detected that the steam system might require a refill with water is a position in which a fill opening (22) of the water tank is exposed.

9. A steam cooking appliance (10) comprising:
a food preparation cavity,
a steam system comprising a steam generator and a water tank (20) for supplying water to the steam generator, the water tank configured to be displaced between an operative position in which the water tank is inserted into the steam cooking appliance to supply water to the steam generator, and a non-operative position in which the water tank is at least partially expelled from the steam cooking appliance, drive means for displacing the water tank between the operative position and the non-operative position,
means for monitoring the water level within the water tank and/or the steam system, and
control means for displacing the water tank from the operative position to the non-operative position if it is detected that the water level is below a predetermined level, **characterized in that** the predetermined level is determined based on a selected operating mode that requires water.

10. The steam cooking appliance (10) of claim 9, comprising a front panel (14) having an opening (18) for insertion of the water tank (20), the water tank having a front panel (30) which in the operative position is positioned to be substantially flush with the front panel (14) of the steam cooking appliance, the water tank (20) further comprising a fill opening (22) which in the non-operative position is at least partially exposed to be accessible to a user.

11. The steam cooking appliance (10) of claim 9 or 10, further comprising a touch sensitive element assigned to the water tank (20) and operable to activate the drive means for displacing the water tank.

12. The steam cooking appliance (10) of claim 11, wherein the touch sensitive element is provided at the front panel (30) of the water tank (20).

13. The steam cooking appliance (10) of claim 10, further comprising a water-permeable cover (34) which spans the fill opening.

14. The steam cooking appliance (10) of any one of claims 9 to 13, further comprising user alert means, wherein the control means is configured to activate the user alert means when it is detected that the steam system might require a refill with water.

15. The steam cooking appliance (10) of any one of claims 9 to 14, wherein the water tank (20) comprises a transparent or translucent scale (26) for the filling level of the tank.

16. The steam cooking appliance (10) of any one of claims 9 to 15, further comprising a display, wherein the control is configured to indicate on the display the filling level of the tank and/or a quantity of water to be filled into the water tank.

17. The steam cooking appliance (10) of any one of claims 9 to 16, wherein the steam cooking appliance (10) allows complete removal of the water tank from the steam cooking appliance (10) .

18. The steam cooking appliance (10) of any one of claims 9 to 17, wherein the control means is configured to initiate displacement of the water tank (20) from a non-operative position to the operative position
(a) on user request,
(b) upon insertion of the water tank (20) at the steam cooking appliance (10);
(c) when detecting that the water tank (20) has been filled to at least the predetermined level; and/or
(d) on expiry of a predetermined waiting time upon expulsion of the water tank (20).

## Patentansprüche

1. Verfahren zum Betreiben eines Dampfgargeräts (10) mit einem Speisenzubereitungsraum, einem Dampfsystem, das einen Dampferzeuger und einen Wasserbehälter (20) zum Versorgen des Dampferzeugers mit Wasser umfasst, und einer Antriebseinrichtung zum Versetzen des Wasserbehälters zwischen einer Betriebsposition, in der der Wasserbehälter in das Dampfgargerät eingeführt ist, um den Dampferzeuger mit Wasser zu versorgen, und einer Ruheposition, in der der Wasserbehälter mindestens zum Teil aus dem Dampfgargerät herausgestoßen ist, wobei das Verfahren Folgendes umfasst:
(a) Überwachen des Wasserstands innerhalb des Dampfsystems; und
(b) Versetzen des Wasserbehälters (20) von der Betriebsposition in die Ruheposition, wenn detektiert wird, dass der Wasserstand innerhalb des Dampfsystems eine vorbestimmte Höhe unterschreitet, wobei die vorbestimmte Höhe basierend auf einem ausgewählten Betriebsmodus für einen jeweiligen Wasserbedarf bestimmt wird.

2. Verfahren nach Anspruch 1, wobei das Verfahren ferner Folgendes umfasst: Bereitstellen einer optischen Meldung, um den Benutzer zum Auffüllen des Wasserbehälters aufzufordern.

3. Verfahren nach einem der vorhergehenden Ansprüche, das ferner umfasst, dass eine akustische Meldung ausgegeben wird, wenn eine Funktion ausgewählt wird, für die Wasser benötigt wird.

4. Verfahren nach Anspruch 1, wobei die vorbestimmte Höhe vor dem Beginn eines Betriebsprogramms, nachdem ein Benutzer einen Betriebsmodus ausgewählt hat, bestimmt wird.

5. Verfahren nach Anspruch 1 oder 4, wobei die Bestimmung der vorbestimmten Höhe während der Ausführung eines Betriebsprogramms wiederholt durchgeführt wird.

6. Verfahren nach einem der vorhergehenden Ansprüche, das ferner umfasst, dass eine Benutzermeldung ausgegeben wird, wenn detektiert wird, dass der Wasserstand innerhalb des Wasserbehälters (20) eine vorbestimmte Höhe unterschreitet.

7. Verfahren nach Anspruch 6, wobei die Benutzermeldung einen akustischen Alarm umfasst, wenn detektiert wird, dass der Wasserstand innerhalb des Wasserbehälters (20) eine vorbestimmte Höhe unterschreitet.

8. Verfahren nach einem der vorhergehenden Ansprüche, wobei die Ruheposition, in die der Wasserbehälter (20) versetzt wird, wenn detektiert wird, dass das Dampfsystem möglicherweise mit Wasser neu aufgefüllt werden muss, eine Position ist, in der eine Füllöffnung (22) des Wasserbehälters frei liegt.

9. Dampfgargerät (10), das Folgendes umfasst:
einen Speisenzubereitungsraum,
ein Dampfsystem, das einen Dampferzeuger und einen Wasserbehälter (20) zum Versorgen des Dampferzeugers mit Wasser umfasst, wobei der Wasserbehälter dazu ausgelegt ist, zwischen einer Betriebsposition, in der der Wasserbehälter in das Dampfgargerät eingeführt ist, um den Dampferzeuger mit Wasser zu versorgen, und einer Ruheposition, in der der Wasserbehälter mindestens zum Teil aus dem Dampfgargerät herausgestoßen ist, versetzt zu werden, eine Antriebseinrichtung zum Versetzen des Wasserbehälters zwischen der Betriebsposition und der Ruheposition,
eine Einrichtung zum Überwachen des Wasserstands innerhalb des Wasserbehälters und/oder des Dampfsystems und
eine Steuereinrichtung zum Versetzen des Wasserbehälters von der Betriebsposition in die Ruheposition, wenn detektiert wird, dass der Wasserstand eine vorbestimmte Höhe unterschreitet, **dadurch gekennzeichnet, dass** die vorbestimmte Höhe basierend auf einem ausgewählten Betriebsmodus für einen jeweiligen Wasserbedarf bestimmt wird.

10. Dampfgargerät (10) nach Anspruch 9, das eine Frontplatte (14) mit einer Öffnung (18) zur Einführung des Wasserbehälters (20) umfasst, wobei der Wasserbehälter eine Frontplatte (30), die in der Betriebsposition so positioniert ist, dass sie mit der Frontplatte (14) des Dampfgargeräts im Wesentlichen bündig abschließt, aufweist, wobei der Wasserbehälter (20) ferner eine Füllöffnung (22), die in der Ruheposition mindestens zum Teil frei liegt und dadurch für einen Benutzer zugänglich ist, umfasst.

11. Dampfgargerät (10) nach Anspruch 9 oder 10, das ferner ein dem Wasserbehälter (20) zugewiesenes berührungsempfindliches Element, das so bedienbar ist, dass die Antriebseinrichtung zum Versetzen des Wasserbehälters aktiviert wird, umfasst.

12. Dampfgargerät (10) nach Anspruch 11, wobei das berührungsempfindliche Element an der Frontplatte (30) des Wasserbehälters (20) bereitgestellt ist.

13. Dampfgargerät (10) nach Anspruch 10, das ferner eine wasserdurchlässige Abdeckung (34), die sich über die Füllöffnung erstreckt, umfasst.

14. Dampfgargerät (10) nach einem der Ansprüche 9 bis 13, das ferner eine Benutzermeldungseinrichtung umfasst, wobei die Steuereinrichtung dazu ausgelegt ist, die Benutzermeldungseinrichtung zu aktivieren, wenn detektiert wird, dass das Dampfsystem möglicherweise mit Wasser neu aufgefüllt werden muss.

15. Dampfgargerät (10) nach einem der Ansprüche 9 bis 14, wobei der Wasserbehälter (20) eine transparente oder halbtransparente Skala (26) für den Füllstand des Behälters umfasst.

16. Dampfgargerät (10) nach einem der Ansprüche 9 bis 15, das ferner ein Display umfasst, wobei die Steuerung dazu ausgelegt ist, auf dem Display den Füllstand des Behälters und/oder eine Menge von in den Wasserbehälter einzufüllendem Wasser anzuzeigen.

17. Dampfgargerät (10) nach einem der Ansprüche 9 bis 16, wobei das Dampfgargerät (10) die vollständige Entnahme des Wasserbehälters aus dem Dampfgargerät (10) zulässt.

18. Dampfgargerät (10) nach einem der Ansprüche 9 bis 17, wobei die Steuereinrichtung dazu ausgelegt ist, die Versetzung des Wasserbehälters (20) von einer Ruheposition in die Betriebsposition bei Folgendem auszulösen:
(a) bei einer Benutzeranforderung,
(b) bei einer Einführung des Wasserbehälters (20) am Dampfgargerät (10);
(c) beim Detektieren, dass der Wasserbehälter (20) mindestens bis zu der vorbestimmten Höhe aufgefüllt worden ist; und/oder
(d) beim Ablauf einer vorbestimmten Wartezeit nach dem Herausstoßen des Wasserbehälters (20).

## Revendications

1. Procédé d'utilisation d'un appareil (10) de cuisson à la vapeur doté d'une cavité de préparation d'aliments, un système de vapeur comportant un générateur de vapeur et un réservoir (20) d'eau servant à fournir de l'eau au générateur de vapeur, et un moyen d'entraînement servant à déplacer le réservoir d'eau entre une position fonctionnelle dans laquelle le réservoir d'eau est inséré dans l'appareil de cuisson à la vapeur pour fournir de l'eau au générateur de vapeur, et une position non fonctionnelle dans laquelle le réservoir d'eau est au moins partiellement expulsé de l'appareil de cuisson à la vapeur, le procédé comportant :
(a) la surveillance du niveau d'eau à l'intérieur du système de vapeur ; et
(b) le déplacement du réservoir (20) d'eau de la position fonctionnelle à la position non fonctionnelle s'il est détecté que le niveau d'eau à l'intérieur du système de vapeur est au-dessous d'un niveau prédéterminé, le niveau prédéterminé étant déterminé d'après un mode de fonctionnement sélectionné qui nécessite de l'eau.

2. Procédé selon la revendication 1, le procédé comportant en outre :
la mise en place d'une alerte optique pour inviter l'utilisateur à remplir le réservoir d'eau.

3. Procédé selon l'une quelconque des revendications précédentes, comportant en outre l'émission d'une alerte acoustique lorsqu'une fonction qui nécessite de l'eau est sélectionnée.

4. Procédé selon la revendication 1, le niveau prédéterminé étant déterminé avant le début d'un programme de fonctionnement suite à la sélection d'un mode de fonctionnement par un utilisateur.

5. Procédé selon les revendications 1 ou 4, la détermination du niveau prédéterminé étant réalisée de façon répétée pendant l'exécution d'un programme de fonctionnement.

6. Procédé selon l'une quelconque des revendications précédentes, comportant en outre l'émission d'une alerte d'utilisateur lorsqu'il est détecté que le niveau d'eau à l'intérieur du réservoir (20) d'eau est au-dessous d'un niveau prédéterminé.

7. Procédé selon la revendication 6, l'alerte d'utilisateur comportant une alarme acoustique lorsqu'il est détecté que le niveau d'eau à l'intérieur du réservoir (20) d'eau est au-dessous d'un niveau prédéterminé.

8. Procédé selon l'une quelconque des revendications précédentes, la position non fonctionnelle jusqu'à laquelle le réservoir (20) d'eau est déplacé lorsqu'il est détecté que le système de vapeur pourrait nécessiter un réapprovisionnement en eau étant une position dans laquelle une ouverture (22) de remplissage du réservoir d'eau est exposée.

9. Appareil (10) de cuisson à la vapeur comportant :
une cavité de préparation d'aliments,
un système de vapeur comportant un générateur de vapeur et un réservoir (20) d'eau servant à fournir de l'eau au générateur de vapeur, le réservoir d'eau étant configuré pour être déplacé entre une position fonctionnelle dans laquelle le réservoir d'eau est inséré dans l'appareil de cuisson à la vapeur pour fournir de l'eau au générateur de vapeur, et une position non fonctionnelle dans laquelle le réservoir d'eau est au moins partiellement expulsé de l'appareil de cuisson à la vapeur, un moyen d'entraînement servant à déplacer le réservoir d'eau entre la position fonctionnelle et la position non fonctionnelle,
un moyen servant à surveiller le niveau d'eau à l'intérieur du réservoir d'eau et/ou du système de vapeur, et
un moyen de commande servant à déplacer le réservoir d'eau de la position fonctionnelle à la position non fonctionnelle s'il est détecté que le niveau d'eau est au-dessous d'un niveau prédéterminé, **caractérisé en ce que** le niveau prédéterminé est déterminé d'après un mode de fonctionnement sélectionné qui nécessite de l'eau.

10. Appareil (10) de cuisson à la vapeur selon la revendication 9, comportant un panneau avant (14) doté d'une ouverture (18) destinée à l'insertion du réservoir (20) d'eau, le réservoir d'eau présentant un panneau avant (30) qui, dans la position fonctionnelle, est positionné pour affleurer sensiblement le panneau avant (14) de l'appareil de cuisson à la vapeur, le réservoir (20) d'eau comportant en outre une ouverture (22) de remplissage qui, dans la position non fonctionnelle, est au moins partiellement exposée pour être accessible à un utilisateur.

11. Appareil (10) de cuisson à la vapeur selon la revendication 9 ou 10, comportant en outre un élément tactile attribué au réservoir (20) d'eau et utilisable pour activer le moyen d'entraînement servant à déplacer le réservoir d'eau.

12. Appareil (10) de cuisson à la vapeur selon la revendication 11, l'élément tactile étant placé au niveau du panneau avant (30) du réservoir (20) d'eau.

13. Appareil (10) de cuisson à la vapeur selon la revendication 10, comportant en outre une couverture (34) perméable à l'eau qui couvre l'ouverture de remplissage.

14. Appareil (10) de cuisson à la vapeur selon l'une quelconque des revendications 9 à 13, comportant en outre un moyen d'alerte d'utilisateur, le moyen de commande étant configuré pour activer le moyen d'alerte d'utilisateur lorsqu'il est détecté que le système de vapeur pourrait nécessiter un réapprovisionnement en eau.

15. Appareil (10) de cuisson à la vapeur selon l'une quelconque des revendications 9 à 14, le réservoir (20) d'eau comportant une échelle (26) transparente ou translucide pour le niveau de remplissage du réservoir.

16. Appareil (10) de cuisson à la vapeur selon l'une quelconque des revendications 9 à 15, comportant en outre un affichage, la commande étant configurée pour indiquer sur l'affichage le niveau de remplissage du réservoir et/ou une quantité d'eau avec laquelle remplir le réservoir d'eau.

17. Appareil (10) de cuisson à la vapeur selon l'une quelconque des revendications 9 à 16, l'appareil (10) de cuisson à la vapeur permettant le retrait complet du réservoir d'eau de l'appareil (10) de cuisson à la vapeur.

18. Appareil (10) de cuisson à la vapeur selon l'une quelconque des revendications 9 à 17, le moyen de commande étant configuré pour déclencher le déplacement du réservoir (20) d'eau d'une position non fonctionnelle à la position fonctionnelle
(a) à la demande de l'utilisateur,
(b) suite à l'insertion du réservoir (20) d'eau dans l'appareil (10) de cuisson à la vapeur ;
(c) lorsqu'il est détecté que le réservoir (20) d'eau a été rempli au moins jusqu'au niveau prédéterminé ; et/ou
(d) à l'expiration d'un temps d'attente prédéterminé suite à l'expulsion du réservoir (20) d'eau.
